# EUROPEAN PATENT APPLICATION

(11) **EP 4 640 941 A1**
(43) Date of publication of application: **29.10.2025**
(21) Application number: 23907078.2
(22) Date of filing: 20.12.2023
(51) Int. Cl.: D06M 15/61

(54) **SURFACE-MODIFIED FIBERS, METHOD FOR PRODUCING SAME, AND MOLDED ARTICLE USING SURFACE-MODIFIED FIBERS**

(30) Priority: 20.12.2022 JP 2022203599
(71) Applicant: Kuraray Co., Ltd., Kurashiki-shi, Okayama 710-0801 (JP)
(72) Inventor: ISHIDA, Eiichi, Okayama-shi, Okayama 702-8601 (JP); WASHITAKE, Yosuke, Okayama-shi, Okayama 702-8601 (JP)
(74) Representative: Müller-Boré & Partner Patentanwälte PartG mbB
(86) International application number: PCT/JP2023/045643
(87) International publication number: WO 2024/135718

(57) **Abstract**

Surface-modified fibers including fibers, and a surface-modifying layer covering at least a part of a surface of the fibers. The surface-modifying layer contains a compound having a hydrogen bonding functional group, and an amount of the surface-modifying layer is 0.01 to 2.5 parts by mass with respect to 100 parts by mass of the fibers used as a raw material.

## Description

### Technical Field

The present invention relates to surface-modified fibers having excellent adhesiveness to resin and concrete, a method for producing the same, and a molded article using the surface-modified fibers.

### Background Art

Synthetic fibers of polyvinyl alcohol, polyamide, or the like are excellent in strength and durability, light, and inexpensive, and hence the synthetic fibers are used as fibers for reinforcing concrete and the like to improve the strength of buildings and prevent cracking.

In addition, the synthetic fibers are used as fibers for reinforcing automotive tires, hydraulic brake hoses, and the like. When the fibers are used in the applications, it is necessary to firmly adhere the fibers and rubber. Therefore, surface-modified fibers in which the surface is modified are used.

As specific examples of the surface-modified fibers, PTL 1 discloses fibers coated with branched polyethyleneimine in an amount of about 0.2 to about 20% by mass with respect to the total weight of the coated fibers.

In addition, PTL 2 describes reinforcing fibers having a surface-modifying layer covering at least a part of a surface of the fibers and the like, the surface-modifying layer containing a specific polyamine compound.

### Citation List

### Patent Literature

PTL 1:JP 2022-511602 A
PTL 2:WO 2022/044460

### Summary of Invention

### Technical Problem

Although the surface-modified fibers exhibit a certain level of performance such as adhesiveness, there remains a need for improvement. Specifically, the fibers described in PTL 1 have an insufficient adhesion force and are desired to be improved, and the fibers described in PTL 2 have a problem of being colored due to treatment at relatively high temperature. In addition, chemical fibers generally have extremely low adhesiveness and adherence to resin, and therefore development of a method for improving the adhesiveness and adherence is desired.

The present invention is made in view of the aforementioned problems, and provides surface-modified fibers having excellent adhesiveness to resin and concrete and capable of suppressing coloring, a method for producing the same, and a molded article using the surface-modified fibers.

### Solution to Problem

The present inventors have intensively investigated to solve the problems, and as a result, found that when a surface-modifying layer containing a compound having a hydrogen bonding functional group is disposed on at least a part of the surface of fibers, the adhesiveness between the fibers and resin and the adhesiveness between the fibers and concrete are improved, and completed the present invention.

Specifically, the present invention relates to the following [1] to [6].
[1] Surface-modified fibers including fibers, and a surface-modifying layer covering at least a part of a surface of the fibers,
   in which the surface-modifying layer contains a compound having a hydrogen bonding functional group, and an amount of the surface-modifying layer is 0.01 to 2.5 parts by mass with respect to 100 parts by mass of the fibers used as a raw material.
[2] The surface-modified fibers according to [1], in which the hydrogen bonding functional group is one or more kinds selected from a hydroxy group, a carboxy group, a salt of a carboxy group, an esterified form of a carboxy group, an acid anhydride of a carboxy group, a carbonyl group, an aldehyde group, an acetalized form of an aldehyde group, an amino group, and an amide group.
[3] The surface-modified fibers according to [1] or [2], in which the fibers are one or more kinds selected from polyamide-based fibers, polyvinyl alcohol-based fibers, polyester-based fibers, and regenerated cellulose-based fibers.
[4] The surface-modified fibers according to any one of [1] to [3], in which a parameter (YI) of hue of the surface-modified fibers is 0 to 50.
[5] A method for producing the surface-modified fibers according to any one of [1] to [4], the method including the following steps (1) and (2):
   [Step (1)]
      preparing a solution or dispersion of the compound having a hydrogen bonding functional group and attaching the solution or the dispersion to the fibers; and
   [Step (2)]
      subjecting the solution or dispersion-attached fibers to heat treatment at 180 to 280°C for 50 seconds or less.
[6] A molded article using the surface-modified fibers according to any one of [1] to [4].

### Advantageous Effects of Invention

The present invention can provide surface-modified fibers having excellent adhesiveness to resin and concrete and capable of suppressing coloring, a method for producing the same, and a molded article using the surface-modified fibers.

### Description of Embodiments

### [Surface-modified Fibers]

Surface-modified fibers of the present invention are surface-modified fibers including fibers and a surface-modifying layer covering at least a part of a surface of the fibers. The surface-modifying layer contains a compound having a hydrogen bonding functional group, and the amount of the surface-modifying layer is 0.01 to 2.5 parts by mass with respect to 100 parts by mass of the fibers used as a raw material.

In the present invention, the surface-modifying layer containing the compound having a hydrogen bonding functional group is disposed on at least a part of the fiber surface, and therefore a high affinity between the hydrogen bonding functional group and the fibers and a high affinity between the hydrogen bonding functional group and concrete and resin are exhibited, to improve the adhesiveness between the fibers and the resin and the adhesiveness between the fibers and the concrete. In addition, the surface-modifying layer is less prone to be decomposed, and therefore the surface-modified fibers can achieve excellent transparency.

In the present invention, the term "surface-modifying layer covering at least a part of a surface of the fibers" may be an aspect in which the surface-modifying layer exists in the form, for example, of a film or a layer on at least part of the surface of the fibers, or may be an aspect in which a raw material for the fibers contains a component corresponding to the surface-modifying layer and the component of the surface-modifying layer exists on a part of the surface of the fibers themselves.

### <Surface-modifying Layer>

The surface-modifying layer in the present invention is a layer containing a compound having a hydrogen bonding functional group. In the present invention, the use of the compound having a hydrogen bonding functional group for the surface-modifying layer can improve the adhesion force between the surface-modified fibers and the resin and the adhesion force between the surface-modified fibers and the concrete.

The term "hydrogen bond" as used herein means a bonding interaction to be formed between a hydrogen atom (donor) that is bonded to an atom having a large electronegativity (e.g., O, N, and S) and polarized to be electrically positive, and an electrically negative atom (acceptor) having a lone electron pair.

Examples of the hydrogen bonding functional group include a hydroxy group, an epoxy group, an ether group, a mercapto group, a carboxy group, a carbonyl group, an aldehyde group, an amino group, an imino group, an imidazole group, an urethane group, an amide group, an urea group, an isocyanate group, a nitrile group, a silanol group, and derivatives thereof. Examples of the carboxy group include a group derived from a monocarboxylic acid and a group derived from a dicarboxylic acid. Examples of the derivative of a carboxy group include a salt of the carboxy group, an esterified form thereof, an amidated form thereof, and an acid anhydride thereof. Examples of the derivative of an aldehyde group include an acetalized form of the aldehyde group. Examples of the derivative of a silanol group include an esterified form of the silanol group.

Among these, one or more kinds selected from a hydroxy group, a carboxy group, a salt of a carboxy group, an esterified form of a carboxy group, an acid anhydride of a carboxy group, a carbonyl group, an aldehyde group, an acetalized form of an aldehyde group, an amino group, and an amide group are preferred, and one or more kinds selected from a carboxy group, a carbonyl group, an amino group, and an amide group are more preferred.

Specific examples of the compound having a hydrogen bonding functional group include compounds having a hydroxy group, such as ethylene glycol, diethylene glycol, 1,2-propylene glycol, and 1,3-propylene glycol;
compounds having an amino group, such as polyethyleneimine, polyallylamine, polyvinylamine, polydiallylmethylamine, polydiallylethylamine, and salts thereof;
compounds having an amide group, such as polyvinyl pyrrolidone, 2-pyrrolidone, N-methyl-2-pyrrolidone, N-hydroxyethyl-2-pyrrolidone, 1,3-dimethyl-2-imidazolidinone, and ε-caprolactam;
and compounds having a carboxy group, such as maleic acid, fumaric acid, citraconic acid, perpropionic acid, and itaconic acid.

Among the compounds having a hydrogen bonding functional group, polyethyleneimine, polyallylamine, polyvinyl pyrrolidone and the like are preferred. The use of the compounds having a hydrogen bonding functional group particularly improves the adhesiveness and the transparency of the surface-modifying layer.

The amount of the compound having a hydrogen bonding functional group in the surface-modifying layer is preferably 70% by mass or more, more preferably 80% by mass or more, even more preferably 90% by mass or more, and substantially still even more preferably 100% by mass. When the amount of the compound having a hydrogen bonding functional group in the surface-modifying layer is within the aforementioned range, the adhesiveness between the fibers and the resin can be improved, and surface-modified fibers having excellent transparency can be obtained.

The surface-modifying layer preferably covers the entire surface of the fibers from the viewpoint of improving the adhesiveness to the resin, and substantially needs to cover at least a part of the surface of the fibers. The specific amount of the surface-modifying layer covering the surface of the fibers is 0.01 to 2.5 parts by mass, preferably 0.05 to 2.0 parts by mass, more preferably 0.1 to 1.5 parts by mass, even more preferably 0.15 to 1.2 parts by mass, even more preferably 0.15 to 1.0 parts by mass, and particularly preferably 0.2 to 0.5 parts by mass, with respect to 100 parts by mass of the fibers used as a raw material.

The surface-modifying layer may or may not contain an additional component other than the described above. Examples of the additional component include a crosslinking agent, an acid, a base, an inorganic salt, an organic salt, a pigment, a dye, an antioxidant, a polymerization initiator, and a plasticizer.

When the surface-modifying layer contains the additional component, the content of the additional component in the surface-modifying layer is preferably 20% by mass or less, more preferably 10% by mass or less, and even more preferably 5% by mass or less from the viewpoint of improving the adhesion force to the resin.

The parameter (YI) of the hue of the surface-modifying layer in the present invention is preferably 0 to 50. When the parameter (YI) of the hue of the surface-modifying layer is within the aforementioned range, surface-modified fibers having excellent transparency can be obtained. From this viewpoint, the parameter (YI) of the hue of the surface-modifying layer is preferably 0 to 45, more preferably 0 to 35, even more preferably 0 to 30, and particularly preferably 0 to 25.

The parameter (YI) of the hue of the surface-modifying layer in the present invention is hue measured in accordance with JIS Z 8722:2009, and specifically, it may be measured by a method described in Examples.

### <Fibers>

Fibers used for the surface-modified fibers of the present invention are not particularly limited, and hydrophilic fibers and hydrophobic fibers may be used. In the present invention, the term "fibers" includes not only short fibers and long fibers, but also forms of a non-woven fabric, a woven fabric, a knitted fabric, a felt, and a sponge.

Examples of hydrophilic synthetic fibers include synthetic fibers formed from a thermoplastic resin having a hydrophilic functional group such as a hydroxy group, a carboxy group, a sulfonic acid group, or an amino group, and/or a hydrophilic bond such as an amide bond.

Specific examples of the thermoplastic resin include a polyvinyl alcohol-based resin, a polyamide-based resin (aliphatic polyamides such as polyamide 6, polyamide 66, polyamide 11, polyamide 12, polyamide 610, polyamide 612, and polyamide 9C (a polyamide formed from nonanediamine and cyclohexanedicarboxylic acid); a semi-aromatic polyamide synthesized from an aromatic dicarboxylic acid and an aliphatic diamine, such as polyamide 9T (a polyamide formed from nonanediamine and terephthalic acid); a wholly aromatic polyamide synthesized from an aromatic dicarboxylic acid and an aromatic diamine, such as poly-p-phenylene terephthalamide), and a polyacrylamide-based resin.

Among these, a polyvinyl alcohol-based resin and a polyamide-based resin are preferred. One kind of the hydrophilic synthetic fibers may be used alone, or two or more kinds thereof may be used in combination. The hydrophilic synthetic fibers may or may not be further subjected to hydrophilic treatment described later to enhance the hydrophilicity.

Examples of hydrophilic natural fibers include natural cellulose fibers including wood pulp such as kraft pulp, and non-wood pulp such as cotton pulp and straw pulp.

Examples of hydrophilic regenerated fibers include regenerated cellulose fibers such as rayon, lyocell, cupra, and polynosic.

One kind of these natural fibers and the regenerated fibers may be used alone, or two or more kinds thereof may be used in combination. The hydrophilic natural fibers and the regenerated fibers may or may not be further subjected to the hydrophilic treatment described later to enhance the hydrophilicity.

The hydrophilic fibers have only to have hydrophilicity at least on the surface thereof. For example, the hydrophilic fibers may be fibers obtained by subjecting the surface of hydrophobic fibers to hydrophilizing treatment, core-shell type composite fibers including a hydrophobic resin at the core thereof and a hydrophilic resin at the shell thereof, or the like, or may be a non-composite fibers having a single structure, but not a core-shell type structure. Examples of the hydrophilic resin constituting the shell include those described for the hydrophilic synthetic fibers. Examples of the hydrophobic fibers formed from the hydrophobic resin include hydrophobic fibers described later.

The hydrophilizing treatment is not particularly limited as long as it is a treatment that chemically or physically provides a hydrophilic functional group to the fiber surface, and may be performed, for example, by a method of modifying the hydrophobic fibers formed from the hydrophobic resin described later with a compound having a hydrophilic functional group such as an isocyanate group, an epoxy group, a hydroxy group, an amino group, an ether group, an aldehyde group, a carbonyl group, a carboxyl group, or an urethane group or a derivative thereof, a method of modifying the surface through electron beam irradiation, or the like.

In the present invention, hydrophobic fibers, which cannot be firmly adhered to resin by the conventional technique, can also be used. Hydrophobic fibers generally have no polar functional group on the fiber surface, and therefore have a low affinity to an adhesive component described later and cannot be firmly adhered to resin. However, when the surface-modifying layer is disposed on the fiber surface like the present invention, hydrophobic fibers can also be firmly adhered to resin.

Examples of hydrophobic fibers usable in the present invention include polyolefin-based fibers such as polyethylene fibers and polypropylene fibers, polyester-based fibers such as polyethylene terephthalate fibers, and wholly aromatic polyester-based fibers. Among these, polyester-based fibers are preferred because the polyester-based fibers are excellent in production cost, strength, heat resistance, durability, and the like.

In the present invention, synthetic fibers and regenerated fibers are preferred among the fibers described above, and one or more kinds of fibers selected from polyamide-based fibers, polyvinyl alcohol-based fibers, polyester-based fibers, and regenerated cellulose-based fibers are particularly preferred.

In the present invention, one kind of fibers may be used alone, and two or more kinds thereof may be used in combination.

The fibers used for the surface-modified fibers of the present invention preferably have a single fiber fineness of 500 to 4,500 dtex. Fibers of 500 dtex or more can be easily industrially produced. In addition, fibers of 4,500 dtex or less tend to keep strength when the surface-modified fibers are used as a reinforcing material.

From the aforementioned viewpoint, the fibers used for the surface-modified fibers of the present invention more preferably have a single fiber fineness of 500 to 4,000 tex, and even more preferably have a single fiber fineness of 1,000 to 3,000 tex.

### [Method for Producing Surface-modified Fibers]

The surface-modified fibers of the present invention are preferably produced by a production method including the following steps (1) and (2). In production through the method including the following steps, the surface-modified fibers can be produced with decomposition of the surface-modifying layer being prevented, and therefore the surface-modified fibers have an excellent adhesion force and can suppress coloring.
[Step (1)]
   preparing a solution or dispersion of the compound having a hydrogen bonding functional group and attaching the solution or the dispersion to the fibers; and
[Step (2)]
   subjecting the solution or dispersion-attached fibers to heat treatment at 180 to 280°C for 50 seconds or less.

In the step (1), a solvent or a dispersion medium that solutes or disperses the compound having a hydrogen bonding functional group is not particularly limited, and from the viewpoint of storage stability and cost, water and a water-soluble organic solvent are preferred. Examples of the water-soluble organic solvent include organic solvents including monohydric alcohols having 1 to 8 carbon atoms, such as methanol, ethanol, isopropanol, n-butanol, isopentyl alcohol, and tertiary butanol; polyhydric alcohols such as ethylene glycol, diethylene glycol, and glycerin; ketones having 3 to 10 carbon atoms, such as acetone, methyl ethyl ketone, diethyl ketone, and methyl isobutyl ketone; and carbonate-based organic solvents such as propylene carbonate.

Among these, water and an alcohol having 1 to 6 carbon atoms are more preferred, and water is even more preferred.

In dissolution or dispersion of the compound having a hydrogen bonding functional group in the solvent or the dispersion medium, the amount of the compound having a hydrogen bonding functional group is preferably 0.01 to 30 parts by mass, more preferably 0.05 to 20 parts by mass, even more preferably 0.1 to 10 parts by mass, and still even more preferably 0.1 to 5 parts by mass, with respect to 100 parts by mass of the solvent or the dispersion medium. When the amount of the compound having a hydrogen bonding functional group with respect to 100 parts by mass of the solvent or the dispersion medium is within the aforementioned ranges, the compound having a hydrogen bonding functional group can be uniformly attached to the fibers at a reduced production cost.

In the step (1), a method for attaching the solution or the dispersion of the compound having a hydrogen bonding functional group to the fibers is not particularly limited, and the step is preferably performed, for example, by one or more kinds selected from immersion, a roll coater, an oiling roller, an oiling guide, nozzle (spray) coating, and brush coating.

The temperature of the heat treatment in the step (2) is preferably 180 to 280°C, more preferably 190 to 270°C, even more preferably 200 to 260°C, even more preferably 220 to 250°C, and still even more preferably 230 to 250°C. When the temperature of the heat treatment is more than the upper limit value, coloring is caused by thermal decomposition. In contrast, when the temperature of the heat treatment is less than lower limit value, sufficient adhesiveness is not exhibited.

The time of the heat treatment is preferably 0.1 to 50 seconds, more preferably 1 to 45 seconds, even more preferably 2 to 40 seconds, even more preferably 3 to 35 seconds, even more preferably 3 to 20 seconds, and still even more preferably 3 to 10 seconds. When the time of the heat treatment is more than the upper limit value, coloring is caused by thermal decomposition. In contrast, when the time is less than the lower limit value, adhesiveness may be reduced.

When the time of the heat treatment is as short as 30 seconds or less, the heat treatment can be performed online through use of a heat treatment furnace in a step of producing polyvinyl alcohol-based fibers.

In the production of the surface-modified fibers, the heat treatment may be performed once, or may be performed twice or more at different treatment temperatures for different treatment times. However, when the heat treatment is performed a plurality of times at high temperature, the surface-modifying layer may be decomposed to cause coloring and reduce the adhesion force.

### <Physical Properties of Surface-modified Fibers>

In the present invention, surface-modified fibers having various shapes can be used according to applications, and may be, for example, short fibers like cut fibers or long fibers. In the case of long fibers, it is a preferable aspect that the fibers are multifilament.

The strength of the surface-modified fibers is preferably 4 to 30 cN/dtex, and more preferably 5 cN/dtex or more.

The strength of the surface-modified fibers in the present invention can be measured by a method described in Examples.

The surface-modified fibers of the present invention can be used in any form, are preferably used in the form of a fiber cord, a woven fabric, a knitted fabric, or the like that includes the surface-modified fibers at least in part, and more preferably used as a woven fabric or a knitted fabric that includes the surface-modified fibers at least in part. For example, the surface-modified fibers can be used as surface-modified fibers to be embedded in resin, cement, or the like as described later.

### [Molded Article]

A molded article of the present invention is not particularly limited as long as the surface-modified fibers are used. The surface-modified fibers have excellent adhesiveness to resin, and therefore a molded article having the surface-modified fibers and a resin layer is preferably formed. The surface-modified fibers used for the molded article are preferably used as a woven fabric or a knitted fabric that includes the surface-modified fibers at least in part from the viewpoint of retention of the form of the resin, and more preferably used as a part of a laminate in which a reinforcing layer including the woven fabric or the knitted fabric and the resin layer are laminated.

A resin used for the molded article of the present invention is not particularly limited, and examples thereof include polyolefin-based resins such as a polyethylene resin, a polypropylene resin, and a polybutylene resin; methacryl-based resins such as a polymethyl methacrylate resin; polystyrene-based resins such as a polystyrene resin, an ABS resin, and an AS resin; polyester-based resins such as a polyethylene terephthalate (PET) resin, a polybutylene terephthalate (PBT) resin, a polytrimethylene terephthalate resin, a polyethylene naphthalate (PEN) resin, and a poly(1,4-cyclohexyldimethylene terephthalate) (PCT) resin; polyamide (PA) resins such as a 6-nylon resin, a 6,6-nylon resin, and PA9T; a polyvinyl chloride resin, a polyoxymethylene (POM) resin, a polycarbonate (PC) resin, a polyphenylene sulfide (PPS) resin, a modified polyphenylene ether (PPE) resin, a polyetherimide (PEI) resin, a polysulfone (PSF) resin, a polyether sulfone (PES) resin, a polyketone resin, a polyarylate (PAR) resin, a polyether nitrile (PEN) resin, a polyether ketone (PEK) resin, a polyetherether ketone (PEEK) resin, a polyether ketone ketone (PEKK) resin, a polyimide (PI) resin, a polyamideimide (PAI) resin, a fluorocarbon (F) resin; a liquid crystalline polymer resin such as a liquid crystalline polyester resin; thermoplastic elastomers such as a polystyrene-based elastomer, a polyolefin-based elastomer, a polyurethane-based elastomer, a polyester-based elastomer, a polyamide-based elastomer, a polybutadiene-based elastomer, a polyisoprene-based elastomer, and a fluorine-containing elastomer; or copolymeric resins and modified resins thereof. One kind of these resins may be used alone, or two or more kinds thereof may be used in combination.

Among these, from the viewpoint of improving the adhesiveness to the surface-modified fibers, a polyvinyl chloride resin is preferred.

The molded article of the present invention may be a fiber-reinforced resin in which the surface-modified fibers are mixed in a resin. As the resin used for the fiber-reinforced resin, the aforementioned resin can be suitably used.

When the molded article of the present invention is the fiber-reinforced resin, the content of the surface-modified fibers is preferably 0.1 to 50 parts by mass, and more preferably 1 to 30 parts by mass, with respect to 100 parts by mass of the resin. When the blending amount of the surface-modified fibers to the resin is within the aforementioned range, the dispersibility of the surface-modified fibers in the resin is satisfactory, and an excellent reinforcement effect is exerted.

A method for incorporating the surface-modified fibers of the present invention into the resin is not particularly limited, and examples thereof include a method in which the surface-modified fibers are added and uniformly mixed with pellets of the resin. Moreover, a method for producing the fiber-reinforced resin is not particularly limited, and a molding method such as melt-extruding molding or injection molding can be adopted.

The resin used for the molded article of the present invention may contain an additive such as an impact-resistance improver or an inorganic filler. Examples of the additive include a flame retardant, a conductivity-imparting agent, a crystal nucleating agent, an ultraviolet absorber, an antioxidant, a vibration damping material, an antibacterial agent, an insect repellent, a deodorizer, a color preventing agent, a thermal stabilizer, a release agent, an antistatic agent, a lubricant, a colorant, and a foaming agent.

When the additive is used, the content of the additive is preferably 10 parts by mass or less, and more preferably 5 parts by mass or less, with respect to 100 parts by mass of the resin. When the content of the additive is within the aforementioned range, an effect of the additive can be obtained while a reinforcement effect of the surface-modified fibers is maintained.

### Examples

Hereinafter, the present invention will be further specifically described by Examples and the like, but the present invention is not limited to these Examples in any way.

### <Fibers>

Polyvinyl alcohol-based fibers (PVA)
KURALON 5501 (2,000 dtex, 1,000 f) manufactured by Kuraray Co., Ltd.
Polyamide-based fibers (PA)
Fibers (1,400 dtex, 204 f) obtained by melt-spinning nylon 6

### <Compound having Hydrogen Bonding Functional Group>

### [Polyethyleneimine (PEI)]

Polyethyleneimine (1)
"EPOMIN P-3000" manufactured by Nippon Shokubai Co., Ltd.
Polyethyleneimine (2)
"EPOMIN SP-200" manufactured by Nippon Shokubai Co., Ltd.

### [Polyvinyl pyrrolidone (PVP)]

"Polyvinyl pyrrolidone K-85" manufactured by Nippon Shokubai Co., Ltd.

### [Polyallylamine]

"PAA-15" manufactured by Nittobo Medical Co., Ltd.

### <Method for Preparing Solution containing Compound having Hydrogen Bonding Functional Group>

A solution used in Example 1 was prepared by mixing 14.3 g of polyethyleneimine (1) and 985.7 g of water. In each of other Examples and Comparative Examples, an aqueous solution forming a surface-modifying layer was prepared from a compound described in Table 1 similarly.

### <Example 1>

Polyvinyl alcohol-based fibers (PVA-based fibers) were immersed in the solution containing the compound having a hydrogen bonding functional group, and the solution was then squeezed with a roller. The resultant fiber cord was subjected to drying treatment at 140°C for 30 seconds. Subsequently, the fiber cord was subjected to heat treatment at 240°C for 5 seconds and wound to produce surface-modified fibers.

### <Examples 2 to 7 and Comparative Examples 1 and 2>

Surface-modified fibers were produced in the same manner as in Example 1 except that the production conditions and the heat treatment conditions were changed to conditions described in Table 1.

The fibers obtained in Examples and Comparative Examples were evaluated in accordance with the following methods. The results are shown in Table 1.

### <Evaluation Method>

### [Parameter (YI) of Hue]

For the resultant surface-modified fibers, the parameter (YI) of hue was measured with a haze meter SH7000 (manufactured by Nippon Denshoku Industries Co., Ltd.) in accordance with JIS Z 8722:2009. The measurement was performed at three positions of the surface-modified fibers, and the arithmetic average of the measured values was adopted as the parameter (YI) of the hue. The results are shown in Table 1.

### [Strength]

With regard to the resultant surface-modified fibers, the strength was measured at a fiber length of 20 cm, an initial load of 0.25 g/d, and a tensile speed of 50%/min in an air at 20°C in accordance with the test method of JIS L-1013:2010. The arithmetic average of values measured at five positions was adopted as a value for this evaluation. The fineness (dtex) of the fibers was determined by the gravimetric method.

### [Interfacial Shear Stress]

To an unsaturated polyester resin (manufactured by Nihon Tokushu Toryo Co., Ltd.), 1% by mass of a curing agent was added and stirred to prepare a resin for evaluation. The resultant resin for evaluation was attached in a ball shape so as to surround the resultant surface-modified fibers, and left at room temperature (20°C) for 2 hours. After that, heat treatment was performed at 70°C for 2 hours.

The fiber diameter and axis length (resin diameter) of the resultant sample were measured, the sample was then fixed on a pasteboard, an adhesion force was measured with a test machine ("Universal testing machine 3365" manufactured by INSTRON), and an interfacial shear stress was calculated by the following formula. Interfacial shear stress (N/mm2) = maximal detection load (N)/(π × fiber diameter (mm) × axis length (mm))

### [Process passing property]

In each of Examples and Comparative Examples, the solution containing the compound having a hydrogen bonding functional group was attached to each of the fibers, and the surface-modified fibers in an amount of 5 kg were wound, and then the degree of contamination (gumming up) of a holding roller through which the surface-modified fibers were passed was determined in accordance with the following evaluation criteria.

### Criteria

G (good): There was no or little roller contamination by gumming up, and there was no problem in spinning operation.
B (bad): Roller contamination by gumming up was remarkable, single yarns were taken and wound during spinning, and there was a problem in spinning operation.

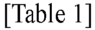

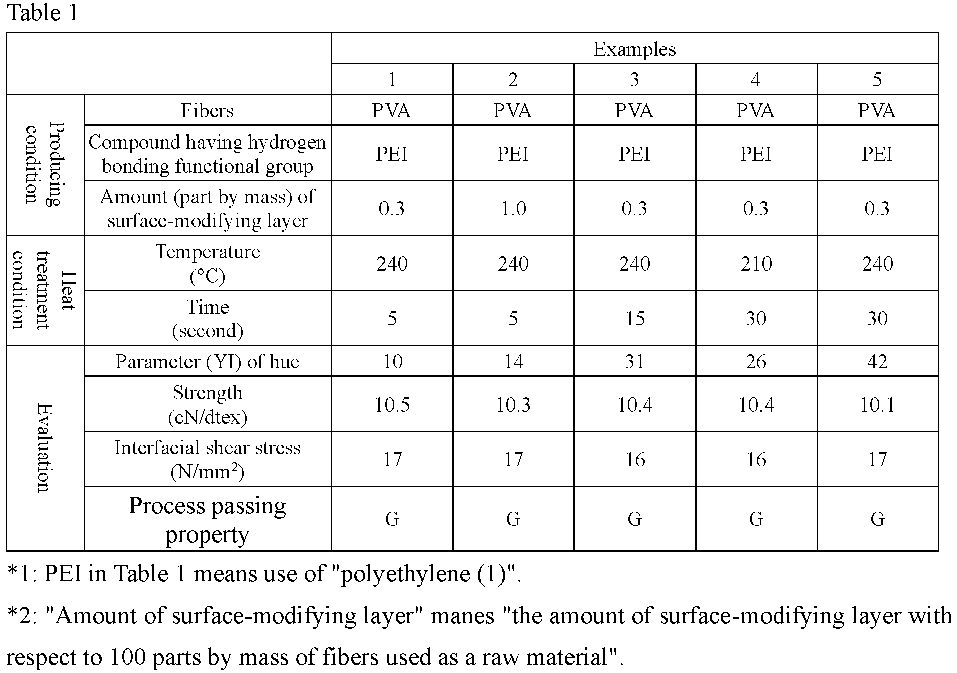

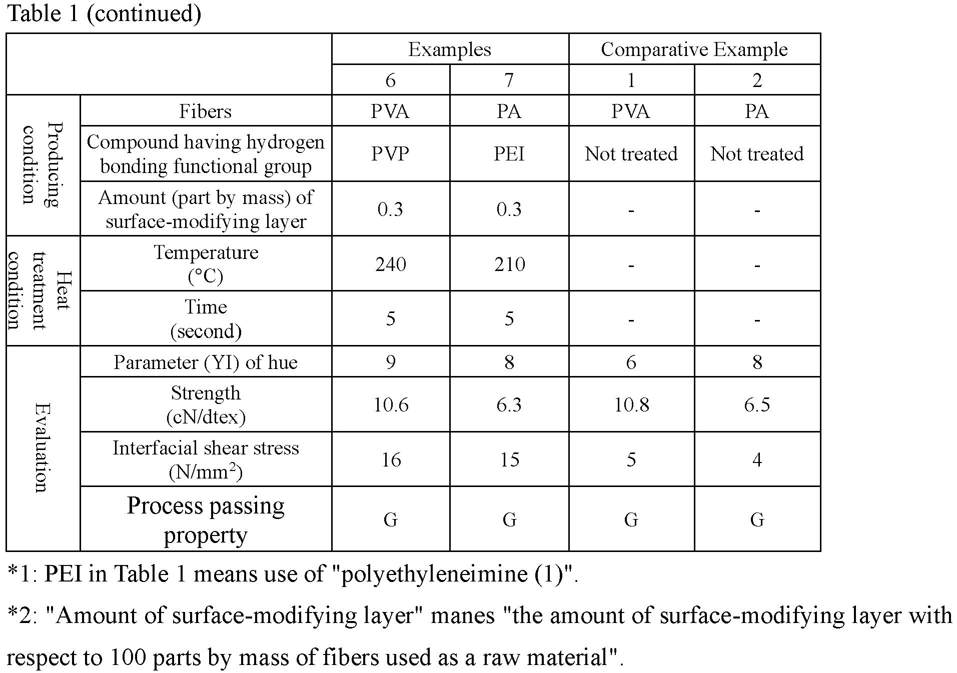

### <Examples 8 and 9>

Surface-modified fibers were produced in the same manner as in Example 1 except that each compound having a hydrogen bonding functional group described in Table 2 was used. Subsequently, the resultant surface-modified fibers were twisted at a rate of 120 twists per meter and bundled with 36 fibers per inch to produce a lattice-like sample. The sample and a soft polyvinyl chloride resin sheet were superimposed on each other and heated at a pressure of 1 MPa and 160°C for 10 minutes to obtain a specimen. The resultant specimen was adjusted to a width of 1 inch, and the peel strength (N/inch) was measured with a test machine ("Universal testing machine 3365" manufactured by INSTRON). The results are shown in Table 2. The measurement results show that a larger value exhibits a larger adhesion force between the surface-modified fibers and the polyvinyl chloride resin.

### <Comparative Example 3>

A sample was prepared in the same manner as in Example 8 except that surface modification treatment was not performed, and the peel strength was measured. The results are shown in Table 2.

### [Table 2]

**Table 2**

| | Compound having hydrogen bonding functional group | Amount (part by mass) of surface-modifying layer | Parameter (YI) of hue | Peel strength (N/inch) |
|---|---|---|---|---|
| Example 8 | Polyethyleneimine (2) | 0.3 | 10 | 28 |
| Example 9 | Polyallylamine | 0.3 | 9 | 27 |
| Comparative Example 3 | Not treated | - | 6 | 5 |

| | | | | |
|---|---|---|---|---|
| *3: "Amount of surface-modifying layer" manes "the amount of surface-modifying layer with respect to 100 parts by mass of fibers used as a raw material". | | | | |

As apparent from the results of Examples and Comparative Examples, surface-modified fibers having excellent adhesiveness and capable of suppressing coloring can be obtained according to the present invention.

## Claims

1. Surface-modified fibers comprising fibers, and a surface-modifying layer covering at least a part of a surface of the fibers,
wherein the surface-modifying layer contains a compound having a hydrogen bonding functional group, and an amount of the surface-modifying layer is 0.01 to 2.5 parts by mass with respect to 100 parts by mass of the fibers used as a raw material.

2. The surface-modified fibers according to claim 1, wherein the hydrogen bonding functional group is one or more kinds selected from a hydroxy group, a carboxy group, a salt of a carboxy group, an esterified form of a carboxy group, an acid anhydride of a carboxy group, a carbonyl group, an aldehyde group, an acetalized form of an aldehyde group, an amino group, and an amide group.

3. The surface-modified fibers according to claim 1 or 2, wherein the fibers are one or more kinds selected from polyamide-based fibers, polyvinyl alcohol-based fibers, polyester-based fibers, and regenerated cellulose-based fibers.

4. The surface-modified fibers according to any one of claims 1 to 3, wherein a parameter (YI) of hue of the surface-modified fibers is 0 to 50.

5. A method for producing the surface-modified fibers according to any one of claims 1 to 4, the method comprising the following steps (1) and (2):
[Step (1)]
preparing a solution or dispersion of the compound having a hydrogen bonding functional group and attaching the solution or the dispersion to the fibers; and
[Step(2)]
subjecting the solution or dispersion-attached fibers to heat treatment at 180 to 280°C for 50 seconds or less.

6. A molded article using the surface-modified fibers according to any one of claims 1 to 4.
